# EUROPEAN PATENT SPECIFICATION

(11) **EP 3 916 268 B1**
(45) Date of publication and mention of the grant of the patent: **18.12.2024**
(21) Application number: 21166493.3
(22) Date of filing: 01.04.2021
(51) Int. Cl.: F16H 57/028, B60K 17/28, B60K 25/06

(54) **LOW NOISE POWER TAKE-OFF TRANSMISSION**
GERÄUSCHARME NEBENABTRIEBSÜBERTRAGUNG
TRANSMISSION DE PRISE DE FORCE À FAIBLE BRUIT

(30) Priority: 28.05.2020 NL 2025694
(43) Date of publication of application: 01.12.2021
(73) Proprietor: Emitech Holding B.V., 8307 DE Ens (NL)
(72) Inventor: HOLTSLAG, Martijn, 8307 DE Ens (NL)
(74) Representative: Nederlandsch Octrooibureau

(56) References cited:
- CA-A- 624 606
- DE-A1- 102010 010 473
- US-A- 2 403 905
- US-A1- 2013 305 862
- US-B2- 7 374 010
- US-B2- 9 494 227

## Description

### Field of the invention

The present invention relates to a power take-off (PTO) transmission, in particular a low noise PTO transmission for vehicles in e.g. agriculture and industry.

### Background art

US patent application US 2007/0157750 A1 discloses a vehicle transmission for a working vehicle wherein the transmission comprises a forwardly projecting PTO shaft to transmit power to a rotary blade of a mower unit, and a rearwardly projecting input shaft drivingly connected to an output terminal of an engine. In an embodiment, the transmission comprises a center casing and a charge pump is mounted onto a lateral middle rear end of the center casing. The center casing is dividable into a front casing part and a rear casing part joined to each other through a vertical lateral joint surface. The charge pump has a charge pump casing fixed to a rear end surface of the rear casing part so as to be disposed on an engine side of the center casing. The charge pump casing encloses a charge pump gear fixed on the input shaft and rotatably fitted along the rear surface of the rear casing part. Oil supplied from the charge pump serves as hydraulic oil for a hydraulic PTO clutch of the transmission and also serves as lube for interior gears and other parts of the transmission.

DE102010010473A1 discloses a drive arrangement for a motor vehicle with a driving machine, a mechanical main drive path and a hydraulic auxiliary drive path. The hydraulic auxiliary drive path comprises a hydraulic circuit with an adjustable hydrostatic pump and hydraulic motors in the wheels, which cannot be driven via the mechanical drive path. The pump is arranged on a power take-off of the engine and is connected to the power take-off in a detachable manner via a clutch.

### Summary of the invention

The present invention aims to provide a power take-off (PTO) transmission, in particular a low noise PTO transmission for a vehicle, such as a vehicle for use in agriculture and industry.

According to the present invention, a power take-off transmission as mentioned in the preamble is provided, comprising an input shaft for connection to an engine of the vehicle, an output shaft for connection to an implement, a gear arrangement connecting the input shaft and the output shaft, and a casing in which the input and output shaft are journaled for rotation and wherein the casing encloses the gear arrangement; and further comprising a clutch member arranged to engage and disengage the output shaft with and from the input shaft and an oil pump resiliently coupled to the gear arrangement and driven thereby for providing oil pressure to the clutch member,
wherein the oil pump comprises a pump shaft for driving the oil pump and wherein the pump shaft is provided with a pump gear in meshed engagement with the gear arrangement, and wherein the pump gear is resilient and comprises rubber and/or plastic material.

The PTO transmission as provided by the present invention generates considerably less noise by virtue of the oil pump being resiliently coupled to the gear arrangement by the resilient pump gear when in operation, so that vibration and pulses induced by the oil pump are at least in part decoupled from the PTO transmission and as such noise is reduced. In particular, the PTO transmission allows mechanical pulses, vibration etc. of the oil pump to be dampened when driven by the gear arrangement as it pumps oil when in operation to allow the clutch member to be operated. By dampening pulses and vibration of the oil pump allows for a significant drop in noise levels, which is particularly advantageous as modern vehicles become less noisy and as such noise produced by a PTO transmission becomes more noticeable. In light of this the PTO transmission of the present invention solves at least in part problems associated with noisy prior art PTO transmissions.

The resiliency of the pump gear can be achieved in an exemplary embodiment wherein the pump gear comprises resilient gear teeth in meshed engagement with the gear arrangement. So in this embodiment the gear teeth of the pump gear exhibit resiliency as they engage the gear arrangement and a such dampen vibration and pulses generated by the oil pump when in operation.

In an even further exemplary embodiment, the pump gear may comprise a resilient core portion connected to the pump shaft, thereby decoupling vibration and pulses of the oil pump from the PTO transmission and as such reduce noise.

Decoupling vibration and pulses produced by the oil pump can be further minimized by also allowing the pump shaft to exhibit resiliency, for example by providing an embodiment wherein the pump shaft is torsional resilient/flexible. In this embodiment the pump shaft exhibits torsional flexibility by allowing the pump shaft to resiliently "twist" somewhat about its longitudinal axis as it drives the oil pump. By providing such torsional resilience to the pump shaft reduces mechanical coupling of vibration and pulses generated by the oil pump to the PTO transmission.

### Short description of drawings

The present invention will be discussed in more detail below, with reference to the attached drawings, in which
Figure 1 shows a schematic view of a power take-off transmission according to an embodiment of the present invention; and wherein
Figure 2 shows a side view of a gear arrangement and an oil pump resiliently coupled to the gear arrangement according to an embodiment of the present invention.

### Detailed description of drawings

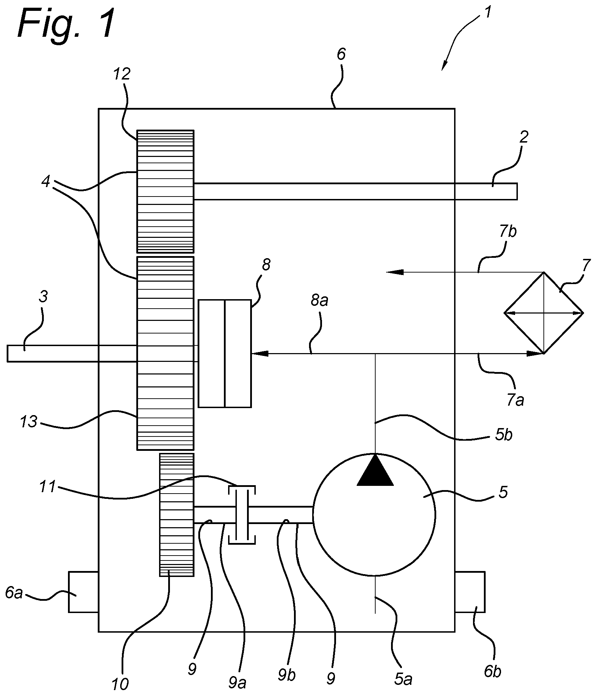

Figure 1 shows a schematic view of a power take-off transmission 1 according to an embodiment of the present invention. In the embodiment shown, the power take-off (PTO) transmission 1 for a vehicle (not shown) comprises an input shaft 2 for connection to an engine of the vehicle and an output shaft 3 for connection to an external implement/attachment. Here the output shaft 3 is configured to drive any sort of external machine implement. For example, a tractor and a PTO transmission provided thereto could operate an external rotary implement like a rotavator, a power harrow, a compressor and so forth.

The PTO transmission 1 further comprises a gear arrangement 4 connecting the input shaft 2 and the output shaft 3, thereby allowing power from the engine of the vehicle to be transferred from the input shaft 2 to the output shaft 3.

A casing 6 is provided in which the input and output shaft 2, 3 are journaled for rotation and wherein the casing 6 encloses the gear arrangement 4. As further depicted, in an exemplary embodiment the casing 6 may be provided with mounting points 6a, 6b for mounting the PTO transmission 1 to the vehicle.

The PTO transmission 1 further comprises a clutch member 8 arranged to allow engagement and disengagement of the output shaft 3 with/from the input shaft 2, i.e. so wherein the clutch member 8 is arranged to allow the output shaft 3 to be driven by the input shaft 2 and wherein the clutch member 8 is arranged to allow the output shaft 3 to be decoupled from the input shaft 2 and so not being driven thereby. Further, an oil pump 5 is provided which is resiliently/flexibly connected to the gear arrangement 4 and driven thereby for providing oil pressure to the clutch member 8 so that the clutch member 8 can be operated when the PTO transmission 1 is in use.

To achieve the above mentioned resiliency and flexibility, the oil pump 5 comprises a pump shaft 9 for driving the oil pump 5 and wherein the pump shaft 9 is provided with a resilient pump gear 10 which is in meshed engagement with the gear arrangement 4, so that the pump gear 10 exhibits resilient behaviour as it engages the gear arrangement 4 when in operation.

According to the invention, by virtue of the resilient pump gear 10 the oil pump 5 is resiliently connected to the gear arrangement 4 and as such generates considerably less noise. That is, the resilient connection between the oil pump 5 and the gear arrangement 4 allows mechanical pulses and vibration induced by the oil pump 5 as it pumps oil during use to be dampened when driven by the gear arrangement 4. As such, dampening the pulses and vibration of the oil pump 5 allows for a significant drop in noise levels, which is particularly advantageous as modern vehicles become more quiet and less noisy and so noise produced by a PTO transmission becomes more noticeable.

The type of oil pump 5 used may be chosen according to specifications. In exemplary embodiments, the oil pump 5 may be a gear pump, piston pump, lobe pump, membrane pump and so forth. The oil pump 5 may be rotationally or linearly operated depending on requirements. As the skilled person will understand, each type of oil pump produces a particular level of vibration and noise levels induced differ between the various pump types.

As shown in Figure 1, in an advantageous embodiment the oil pump 5 may be internally arranged in the casing 6 for providing oil pressure to the clutch member 8. This allows for a compact design of the PTO transmission 1. In a further embodiment an internally arranged oil pump 5 may be configured to e.g. circulate oil through the casing 6 for lubrication, cooling etc. Also, arranging the oil pump 5 internally in the casing 6 reduces the overall noise of the PTO transmission 1 when in use. In an alternative embodiment, which is not depicted, the oil pump 5 may also be arranged externally to the casing 6.

In an advantageous embodiment, the PTO transmission 1 may comprise a cooling member 7 fluidly coupled to the oil pump 5 through a cooling input line 7a. The cooling member 7 may then be fluidly coupled to internals of the casing 6 through a cooling output line 7b, thereby allowing cooled oil to circulate through the casing 6 and as such cool and lubricate the PTO transmission 1. Typically, in an embodiment the cooling member 7 is arranged external to the casing 6.

As depicted, in an embodiment the oil pump 5 comprises a pump input line 5a internally arranged in the casing 6 for drawing oil therefrom to provide oil pressure to a pump output line 5b of the oil pump 5. The clutch member 8 then comprises a clutch input line 8a which is fluidly connected to the pump output line 5b and the clutch member 8, so that the oil pump 5 is able to provide sufficient oil pressure to the clutch member 8 to be operated during use of the PTO transmission 1.

As shown, note that in an embodiment the pump output line 5b may be connected to the cooler input line 7a as mentioned earlier.

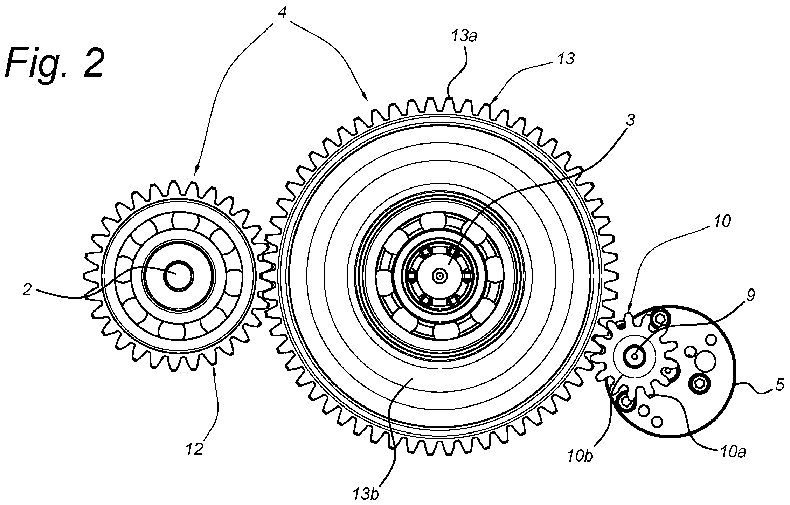

In Figure 2 there is depicted a side view of a gear arrangement 4 resiliently coupled to an oil pump 5 according to an embodiment of the present invention.

In an exemplary embodiment, the pump gear 10 comprises resilient gear teeth 10a in meshed engagement with the gear arrangement 4. In this embodiment the gear teeth 10a of the pump gear 10 exhibit resilience and flexibility as they engage the gear arrangement 4 and a such dampen vibration generated by the oil pump 5 during use.

In a further exemplary embodiment, the pump gear 10 may also comprise a resilient pump gear core portion 10b connected/mounted to the pump shaft 9. This also allows decoupling and damping of vibration of the oil pump 5 for further noise reduction.

In an exemplary embodiment, the pump gear 10 comprises a rubber and/or plastic material. These materials provide adequate resilience and flexibility needed for damping and decoupling vibration induced by the oil pump 5. In an embodiment, the gear teeth 10a and/or the pump gear core portion 10b may each comprise a rubber and/or plastic material. In a specific exemplary embodiment, the plastic material may be Lauramid PA12, which provides sufficient resilience and flexibility to allow vibration from the oil pump 5 to be dampened and decoupled.

To even further reduce noise coming from the PTO transmission 1 when in use, an embodiment is conceivable wherein the pump shaft 9 is torsional resilient/flexible. In this embodiment the pump shaft 9 exhibits torsional resilience by allowing the pump shaft 9 to resiliently "twist" somewhat about its longitudinal axis as it drives the oil pump 5. By providing such torsional resilience or flexibility to the pump shaft 9 further reduces mechanical coupling of vibration induced by the oil pump 5. To achieve adequate resilience, in an exemplary embodiment the pump shaft 9 may comprise a rubber or plastic material.

Torsional resilience of the pump shaft 9 may also be achieved in an embodiment wherein the pump shaft 9 comprises a gear end 9a with the pump gear 10 connected thereto, and an input end 9b for driving the oil pump 5. The pump shaft 9 then comprises a torsional resilient coupling member 11 connecting the gear end 9a and the input end 9b. In this embodiment the pump shaft 9, and in particular the gear end 9a and the input end 9b, need not be torsional resilient and may remain substantially torsionally rigid, e.g. made of steel. The coupling member 11 may then be made torsional resilient by using e.g. a rubber or plastic material for connecting the gear end 9a and the input end 9b.

In an embodiment, the gear arrangement 4 may comprise an input gear 12 arranged on the input shaft 2 and an output gear 13 arranged on the output shaft 3, wherein the input and output gears 12, 13 are in meshed engagement, and wherein the pump gear 10 is in meshed engagement with the input gear 12 or the output gear 13. In this way the oil pump 5 may be driven by the input or output gear 12, 13 through direct meshed engagement of the pump gear 10 with the input or output gear 12, 13, thereby avoiding the use of a separate gear on the input or output shaft 2, 3 for engaging the pump gear 10. This will simplify the PTO transmission 1 and reduce cost thereof.

Note that in the embodiments depicted, the pump gear 10 is in meshed engagement with the output gear 13. Moreover, but not depicted, in further embodiments it is conceivable that the pump gear 10 and the output gear 13 are connected through one or more intermediate gears between them and as such form a separate transmission.

It is also worth noting that embodiments are conceivable wherein further intermediate gears are provided between the input gear 12 and the output gear 13 as part of the gear arrangement 4.

In an embodiment, the gear arrangement 4 is a reduction gear arrangement wherein the input gear 12 is smaller than the output gear 13. In this embodiment, the output shaft 3 may be provided with increased torque during use of the PTO transmission 1 by virtue of the larger output gear 13. Also, in case the pump gear 10 is in meshed engagement with the larger output gear 13, then the oil pump 5 may be powered at a slower rotational speed of the pump shaft 9 and as such may produce less noise.

In further advantageous embodiments, the gear arrangement 4 may also exhibit resilient behaviour for further mechanical damping. For example, in an embodiment the output gear 13 may be resilient/flexible, thereby further damping vibration coming from the oil pump 5 when in use. In an embodiment, the output gear 13 may comprise a rubber and/or plastic material to achieve adequate resilience.

Like the pump gear 10, in further embodiments the output gear 13 may comprise resilient gear teeth 13a and/or comprise a resilient output gear core portion 13b connected to the output shaft 3. This will introduce further mechanical resilience and flexibility to the gear arrangement 4 and as such improve damping of vibration and reduce noise levels of the PTO transmission 1.

The PTO transmission 1 of the present application may be used as a rear or front PTO transmission, i.e. wherein the PTO transmission 1 is used for either rear or front machine implements with respect to the vehicle. Here the PTO transmission 1 may be mounted at the rear or the back of a vehicle. Since engines of vehicles are often located in the front of the vehicle, and wherein these engines become more quiet, the PTO transmission 1 of the present invention is able to maintain low noise levels when mounted to the front of the vehicle. From this it follows that the PTO transmission 1 may be a front PTO transmission configured for being mounted to the front of a vehicle, so that overall noise levels are reduced when the vehicle and the front PTO transmission are in operation.

## Claims

1. A power take-off, PTO, transmission (1) for a vehicle, comprising an input shaft (2) for connection to an engine of the vehicle, an output shaft (3) for connection to an implement, a gear arrangement (4) connecting the input shaft (2) and the output shaft (3), and a casing (6) in which the input and output shaft (2,3) are journaled for rotation and wherein the casing (6) encloses the gear arrangement (4); and further comprising
a clutch member (8) arranged to engage and disengage the output shaft (3) with and from the input shaft (2) and an oil pump (5) resiliently coupled to the gear arrangement (4) and driven thereby for providing oil pressure to the clutch member (8),
wherein the oil pump (5) comprises a pump shaft (9) for driving the oil pump (5) and wherein the pump shaft (9) is provided with a pump gear (10) in meshed engagement with the gear arrangement (4), and **characterized in that** the pump gear (10) is resilient and comprises rubber and/or plastic material.

2. The power take-off transmission according to claim 1, wherein the pump gear (10) comprises resilient gear teeth (10a) in meshed engagement with the gear arrangement (4).

3. The power take-off transmission according to claim 1 or 2, wherein the pump gear (10) comprises a resilient pump gear core portion (10b) connected to the pump shaft (9).

4. The power take-off transmission according to any one of claims 1-3, wherein the pump shaft (9) is torsional resilient.

5. The power take-off transmission according to claim 4, wherein the pump shaft (9) comprises a gear end (9a) provided with the pump gear (10), and an input end (9b) for driving the oil pump (5), and wherein the pump shaft (9) further comprises a torsional resilient coupling member (11) connecting the gear end (9a) and the input end (9b).

6. The power take-off transmission according to any one of claims 1-5, wherein the gear arrangement (4) comprises an input gear (12) arranged on the input shaft (2) and an output gear (13) arranged on the output shaft (3), the input and output gears (12, 13) being in meshed engagement, and wherein the pump gear (10) is in meshed engagement with the input gear (12) or the output gear (13).

7. The power take-off transmission according to claim 6, wherein the gear arrangement (4) is a reduction gear arrangement wherein the input gear (12) is smaller than the output gear (13).

8. The power take-off transmission according to claim 6 or 7, wherein the output gear (13) is resilient.

9. The power take-off transmission according to claim 8, wherein the output gear (13) comprises resilient gear teeth (13a).

10. The power take-off transmission according to claims 8 or 9, wherein the output gear (13) comprises a resilient output gear core portion (13b) connected to the output shaft (3).

11. The power take-off transmission according to any one of claims 6-10, wherein the output gear (13) comprises rubber and/or plastic material.

12. The power take-off transmission according to claim 5, wherein the coupling member (11) comprises rubber and/or plastic material.

13. The power take-off transmission according to any one of claims 1-12, wherein the power take-off transmission (1) is a front power take-off transmission configured for being mounted to a front side of a vehicle.

## Patentansprüche

1. Nebenabtriebs- bzw. PTO-Getriebe (1) für ein Fahrzeug, mit einer Antriebswelle (2) zur Verbindung mit einem Motor des Fahrzeugs, einer Abtriebswelle (3) zur Verbindung mit einem Gerät, einer die Antriebswelle (2) und die Abtriebswelle (3) verbindenden Getriebeanordnung (4) und einem Gehäuse (6), in dem die Eingangswelle und die Abtriebswelle (2, 3) drehbar gelagert sind und wobei das Gehäuse (6) die Getriebeanordnung (4) umschließt; und ferner mit
einem Kupplungselement (8), das so angeordnet ist, dass es die Abtriebswelle (3) mit der Antriebswelle (2) in Eingriff bringt und von dieser löst, und einer Ölpumpe (5), die elastisch mit der Getriebeanordnung (4) gekoppelt ist und von dieser angetrieben wird, um das Kupplungselement (8) mit Öldruck zu versorgen,
wobei die Ölpumpe (5) eine Pumpenwelle (9) zum Antrieb der Ölpumpe (5) umfasst und wobei die Pumpenwelle (9) mit einem Pumpenzahnrad (10) versehen ist, das in kämmendem Eingriff mit der Zahnradanordnung (4) steht, und **dadurch gekennzeichnet, dass**
das Pumpenzahnrad (10) elastisch ist und Gummi- und/oder Kunststoffmaterial umfasst.

2. Nebenabtriebsgetriebe gemäß Anspruch 1, wobei das Pumpenzahnrad (10) elastische Zähne (10a) umfasst, die mit der Zahnradanordnung (4) in kämmendem Eingriff stehen.

3. Nebenabtriebsgetriebe gemäß Anspruch 1 oder 2, wobei das Pumpenzahnrad (10) einen elastischen Pumpenzahnradkernabschnitt (10b) umfasst, der mit der Pumpenwelle (9) verbunden ist.

4. Nebenabtriebsgetriebe gemäß einem der Ansprüche 1 bis 3, wobei die Pumpenwelle (9) torsionselastisch ist.

5. Nebenabtriebsgetriebe gemäß Anspruch 4, wobei die Pumpenwelle (9) ein mit dem Pumpenzahnrad (10) versehenes Getriebeende (9a) und ein Eingangsende (9b) zum Antrieb der Ölpumpe (5) umfasst und wobei die Pumpenwelle (9) ferner ein torsionselastisches Kupplungselement (11) umfasst, das das Getriebeende (9a) und das Eingangsende (9b) verbindet.

6. Nebenabtriebsgetriebe gemäß einem der Ansprüche 1 bis 5, wobei die Getriebeanordnung (4) ein auf der Antriebswelle (2) angeordnetes Eingangszahnrad (12) und ein auf der Abtriebswelle (3) angeordnetes Ausgangszahnrad (13) auf der Abtriebswelle (3) umfasst, wobei die Antriebs- und Abtriebszahnräder (12, 13) in kämmendem Eingriff stehen und wobei das Pumpenzahnrad (10) in kämmendem Eingriff mit dem Antriebszahnrad (12) oder dem Abtriebszahnrad (13) steht.

7. Nebenabtriebsgetriebe gemäß Anspruch 6, wobei die Zahnradanordnung (4) eine Untersetzungsgetriebeanordnung ist, bei der das Eingangszahnrad (12) kleiner als das Ausgangszahnrad (13) ist.

8. Nebenabtriebsgetriebe gemäß Anspruch 6 oder 7, wobei das Ausgangszahnrad (13) elastisch ist.

9. Nebenabtriebsgetriebe gemäß Anspruch 8, wobei das Abtriebszahnrad (13) elastische Zahnradzähne (13a) umfasst.

10. Nebenabtriebsgetriebe gemäß Anspruch 8 oder 9, wobei das Abtriebsrad (13) einen elastischen Abtriebsrad-Kernabschnitt (13b) umfasst, der mit der Abtriebswelle (3) verbunden ist.

11. Nebenabtriebsgetriebe gemäß einem der Ansprüche 6 bis 10, wobei das Abtriebsrad (13) Gummi- und/oder Kunststoffmaterial umfasst.

12. Nebenabtriebsgetriebe gemäß Anspruch 5, wobei das Kupplungselement (11) Gummi- und/oder Kunststoffmaterial umfasst.

13. Nebenabtriebsgetriebe gemäß einem der Ansprüche 1 bis 12, wobei das Nebenabtriebsgetriebe (1) ein Front-Nebenabtriebsgetriebe ist, das für eine Montage an einer Vorderseite eines Fahrzeugs ausgelegt ist.

## Revendications

1. - Transmission (1) de prise de force, PTO, pour un véhicule, comprenant un arbre d'entrée (2) pour une liaison à un moteur du véhicule, un arbre de sortie (3) pour une liaison à un outil, un agencement d'engrenages (4) reliant l'arbre d'entrée (2) et l'arbre de sortie (3), et un boîtier (6) dans lequel les arbres d'entrée et de sortie (2, 3) sont tourillonnés pour une rotation, et le boîtier (6) enfermant l'agencement d'engrenages (4) ; et comprenant en outre
un élément d'embrayage (8) agencé pour engager et désengager l'arbre de sortie (3) avec/de l'arbre d'entrée (2) et une pompe à huile (5) accouplée élastiquement à l'agencement d'engrenages (4) et entraînée par celui-ci pour fournir une pression d'huile à l'élément d'embrayage (8),
la pompe à huile (5) comprenant un arbre de pompe (9) pour entraîner la pompe à huile (5), et l'arbre de pompe (9) comportant un engrenage de pompe (10) en engagement par engrènement avec l'agencement d'engrenages (4), et
**caractérisée par le fait que** l'engrenage de pompe (10) est élastique et comprend du caoutchouc et/ou une matière plastique.

2. - Transmission de prise de force selon la revendication 1, dans laquelle l'engrenage de pompe (10) comprend une denture (10a) élastique en engagement par engrènement avec l'agencement d'engrenages (4).

3. - Transmission de prise de force selon la revendication 1 ou 2, dans laquelle l'engrenage de pompe (10) comprend une partie centrale d'engrenage de pompe (10b) élastique reliée à l'arbre de pompe (9).

4. - Transmission de prise de force selon l'une quelconque des revendications 1 à 3, dans laquelle l'arbre de pompe (9) est élastique en torsion.

5. - Transmission de prise de force selon la revendication 4, dans laquelle l'arbre de pompe (9) comprend une extrémité d'engrenage (9a) comportant l'engrenage de pompe (10), et une extrémité d'entrée (9b) pour entraîner la pompe à huile (5), et l'arbre de pompe (9) comprenant en outre un élément d'accouplement (11) élastique en torsion reliant l'extrémité d'engrenage (9a) et l'extrémité d'entrée (9b).

6. - Transmission de prise de force selon l'une quelconque des revendications 1 à 5, dans laquelle l'agencement d'engrenages (4) comprend un engrenage d'entrée (12) disposé sur l'arbre d'entrée (2) et un engrenage de sortie (13) disposé sur l'arbre de sortie (3), les engrenages d'entrée et de sortie (12, 13) étant en engagement par engrènement, et l'engrenage de pompe (10) étant en engagement par engrènement avec l'engrenage d'entrée (12) ou l'engrenage de sortie (13).

7. - Transmission de prise de force selon la revendication 6, dans laquelle l'agencement d'engrenages (4) est un agencement d'engrenages de réduction dans lequel l'engrenage d'entrée (12) est plus petit que l'engrenage de sortie (13).

8. - Transmission de prise de force selon la revendication 6 ou 7, dans laquelle l'engrenage de sortie (13) est élastique.

9. - Transmission de prise de force selon la revendication 8, dans laquelle l'engrenage de sortie (13) comprend une denture (13a) élastique.

10. - Transmission de prise de force selon la revendication 8 ou 9, dans laquelle l'engrenage de sortie (13) comprend une partie centrale d'engrenage de sortie (13b) élastique reliée à l'arbre de sortie (3).

11. - Transmission de prise de force selon l'une quelconque des revendications 6 à 10, dans laquelle l'engrenage de sortie (13) comprend du caoutchouc et/ou une matière plastique.

12. - Transmission de prise de force selon la revendication 5, dans laquelle l'élément d'accouplement (11) comprend du caoutchouc et/ou une matière plastique.

13. - Transmission de prise de force selon l'une quelconque des revendications 1 à 12, la transmission (1) de prise de force étant une transmission de prise de force avant configurée pour être montée sur un côté avant d'un véhicule.
